# EUROPÄISCHE PATENTSCHRIFT

(11) **EP 2 111 146 B1**
(45) Veröffentlichungstag und Bekanntmachung des Hinweises auf die Patenterteilung: **25.05.2011**
(21) Anmeldenummer: 08707098.3
(22) Anmeldetag: 17.01.2008
(51) Int. Cl.: A47L 13/16, C08J 9/00, C08J 9/08

(54) **VERFAHREN ZUR HERSTELLUNG EINES CELLULOSE-SCHWAMMTUCHES, CELLULOSE-SCHWAMMTUCH UND DESSEN VERWENDUNG**
METHOD FOR PRODUCING A CELLULOSE SPONGE CLOTH, CELLULOSE SPONGE CLOTH AND USE THEREOF
PROCÉDÉ DE FABRICATION D'UN TISSU-ÉPONGE EN CELLULOSE, TISSU-ÉPONGE AINSI OBTENU ET SON UTILISATION

(30) Priorität: 17.01.2007 DE 102007003336
(43) Veröffentlichungstag der Anmeldung: 28.10.2009
(73) Patentinhaber: Carl Freudenberg KG, 69469 Weinheim (DE)
(72) Erfinder: NOWOTTNICK, Heike, 86150 Augsburg (DE); HAUSDORF, Jörg, 64668 Rimbach (DE); SCHINDLER, Thomas, 86415 Mering (DE); LEINHARDT, Peter, S-603 54 Norrköping (SE)
(86) Internationale Anmeldenummer: PCT/EP2008/000333
(87) Internationale Veröffentlichungsnummer: WO 2008/087026

(56) Entgegenhaltungen:
- WO-A-98/28360
- WO-A-03/029329
- DE-C1- 19 623 704

## Beschreibung

### Technisches Gebiet

Die Erfindung betrifft ein Verfahren zur Herstellung eines Cellulose-Schwammtuches, ein nach dem Verfahren hergestelltes Cellulose-Schwammtuch und dessen Verwendung.

### Stand der Technik

Cellulose-Schwammtücher sind seit langem bekannt. Es handelt sich dabei um schichtförmige Gebilde mit einer Dicke von ungefähr 2 bis 10 mm im nassen Zustand. Cellulose-Schwammtücher werden allgemein nach dem Cellulosexanthogenat-Verfahren hergestellt, bei welchem aus Holz gewonnene Zellstofflagen in einer 15 - 20%-igen NaOH-Lösung, welche im Überschuss vorliegt, gequollen werden; hierbei entsteht die sogenannte Natroncellulose. Die Natronlauge wird anschließend abgepresst; sie enthält in gelöster Form Hemicellulosen, welche die nachfolgenden Verfahrensschritte ansonsten stören würden. Der verbleibende sogenannte Presskuchen wird in zerkleinerter Form unter Vakuum mit Schwefelkohlenstoff behandelt. Bei dieser Behandlung entsteht Cellulosexanthogenat, das in Natronlauge löslich ist. Die alkalischen Lösungen von Cellulosexanthogenat unterliegen einem Molekulargewichts-Abbau, wobei der Durchschnittspolymerisationsgrad (DP) auf einen Wert von ca. 600 abnimmt. In Abhängigkeit insbesondere des Temperaturprofils und der Verweildauer bzw. des Alters der Cellulosexanthogenat-Lösungen unterliegen diese daher einem Viskositätsabbau, der zu schwankenden Produktqualitäten der mit dem Verfahren erhältlichen Schwammtücher führt.

Um die mechanische Festigkeit der Tücher zu erhöhen, werden Baumwollfasern oder Kunststoffnetze eingesetzt. Hierzu werden die Baumwollfasern mit einer Zubereitung aus tensidhaltiger Natronlauge behandelt und danach mit Viskose verknetet. Anschließend erfolgt die Zugabe einer Pigmentdispersion, je nach Farbton mit einem Pigmentanteil von 20 bis 50 Gew.-%. Danach wird Glaubersalz als Porenbildner zugefügt und die Masse intensiv verknetet. Die erhaltene Viskose-Masse wird dann als dünne Schicht auf ein gelochtes Stahlband aufgetragen und durch ein ca. 100°C heißes alkalisches Natriumsulfatbad geführt. Hierbei erfolgt eine thermische Spaltung des Cellulosexanthogenats, bei der die giftigen Produkte Schwefelkohlenstoff und Schwefelwasserstoff entstehen. Durch abschließendes Behandeln mit Schwefelsäure und Waschen wird das Natriumsulfat wieder aus dem Tuch entfernt; die vollständige Abtrennung der Schwefel-Verbindungen ist nicht möglich

Ein Nachteil des Verfahrens gemäß dem Stand der Technik besteht demnach in der schlechten Umweltverträglichkeit der eingesetzten Chemikalien, wie zum Beispiel von Schwefelkohlenstoff, und der entstehenden schwefelhaltigen Nebenprodukte.

Ein weiterer Nachteil des Verfahrens besteht in starken Schwankungen der resultierenden Produktqualität, da Natroncellulose bzw. Cellulosexanthogenat-Lösungen einem Molekulargewichts-Abbau bzw. Polymer-Umlagerungen unterliegen. Die Prozeßsicherheit des Xanthogenat-Verfahrens ist infolgedessen sehr unbefriedigend.

Die DE 196 23 704 C1 beschreibt ein verfahren zur Herstellung eines cellulose-Schwammtuchs, in dem die acetylierte cellulose in einem Salzhaltigen organischen Lösemittel gelöst wird.

### Darstellung der Erfindung

Der Erfindung liegt die Aufgabe zu Grunde, ein Verfahren zur Herstellung eines Cellulose-Schwammtuches bereitzustellen, das besonders effizient und umweltverträglich ist. Außerdem besteht die erfindungsgemäße Aufgabe in der Bereitstellung eines Verfahrens, dessen Prozeßsicherheit gegenüber dem Stand der Technik verbessert ist und das somit die Reproduzierbarkeit der Produktqualität erhöht.

Die Lösung der gestellten Aufgabe wird mit den Merkmalen des Anspruchs 1 erreicht.

Dazu wird Cellulose in einer ionischen Flüssigkeit gelöst, mit Baumwollfasern, mit zumindest einem Porenbildner und zumindest einem Treibmittel gemischt und anschließend Bedingungen ausgesetzt, die zu einer Zersetzung des Treibmittels, damit zu einer Aufschäumung der Celluloselösung und zur Ausfällung der Cellulose führen.

Unter ionischen Flüssigkeiten werden niedrig schmelzende Salze mit einer Schmelztemperatur kleiner als 100°C und mit vergleichsweise niedriger Viskosität verstanden. Bei ionischen Flüssigkeiten handelt es sich vorwiegend um quarternäre Stickstoff- oder Phosphorverbindungen (Salze). Typische Kationentypen ionischer Flüssigkeiten sind das Pyridinium-Ion, das Imidazolium-Ion, das Ammonium-Ion oder das Phosphonium-Ion. Durch eine unterschiedliche Gestaltung der Substituenten ergibt sich eine vielfältige Variationsbreite der Kationen. Ähnliches trifft auch auf die Anionen zu. Deshalb ist eine Vielzahl von ionischen Flüssigkeiten allein durch den Austausch der Substituenten am Kation sowie durch Variation der Anionen realisierbar.

Ionische Flüssigkeiten besitzen keinen Dampfdruck. Sie gelangen folglich weder in die Atmosphäre noch in die Luft am Arbeitsplatz. Ionische Flüssigkeiten sind ferner nicht brennbar. Damit kommen sie als umwelt- und resourcenschonender Ersatz für klassische organische Lösungsmittel in Betracht. Durch ihre Eigenschaften, wie u.a. hohe Polarität und niedrige Schmelztemperatur eignen sich die ionischen Flüssigkeiten besonders als Lösemittel für Cellulose.

Es ist somit durch die Verwendung einer ionischen Flüssigkeit als Lösungsmittel für die Herstellung eines Cellulose-Schwammtuches keine Derivatisierung der Cellulose mehr erforderlich; dies ist unter Umwelt- und Arbeitsschutz-Aspekten ein wichtiger Vorteil gegenüber dem Xanthogenatverfahren des Standes der Technik, da weder Schwefelwasserstoff noch Schwefelkohlenstoff im Prozeßgas vorhanden sind.

Der Herstellungsprozeß für Schwammtücher wird erfindungsgemäß außerdem erheblich beschleunigt, da der Alkalisierungsprozeß der Cellulose, sowie die technisch aufwendige Xanthogenierung im Vakuum nicht mehr erforderlich sind.

Durch das erfindungsgemäße Verfahren wird das Vorurteil widerlegt, nach dem die Herstellung von Formkörpern aus trockener Cellulose unter Verwendung wasserfreier ionischer Flüssigkeiten nur möglich ist, wenn die Cellulose zuvor einem aufwendigen Mahlverfahren unterzogen wurde. Beispielsweise beschreibt die Patentschrift DE 10 2004 031 025 B3, daß mit trockener Cellulose und wasserfreien ionischen Flüssigkeiten auch nach sehr langen Lösezeiten keine homogenen Lösungen erhalten werden können, wenn die Cellulose nicht zuvor fein gemahlen wurde.

Entgegen der vorgenannten Patentschrift muß die Cellulose auch nicht durch starke Scherung in Wasser zunächst einem Aufschluß bis zur Einzelfaser unterzogen werden; das Erfordernis einer aufwendigen Abtrennung des Wassers durch Destillation im Vakuum entfällt beim erfindungsgemäßen Verfahren daher vollständig. Die Erfindung ermöglicht die direkte Verwendung wasserfreier oder im wesentlichen wasserfreier Cellulose.
Des Weiteren ist zur Herstellung der Cellulose-Lösung nicht gemahlene Cellulose verwendbar. Erfindungsgemäß wird bevorzugt nicht gemahlene, insbesondere grob zerkleinerte Cellulose verwendet.

Vielmehr kann sie gemäß dem erfindungsgemäßen Verfahren direkt nach grober Zerkleinerung, insbesondere ohne das Erfordernis eines aufwendigen Mahlprozesses, unter Rühren in die im wesentlichen wasserfreie ionische Flüssigkeit eingetragen werden. Auch die Nachteile fein gemahlener Cellulose werden somit erfindungsgemäß überwunden. Feine Cellulose-Pulver verursachen infolge niedriger Schüttgewichte hohe Logistik-Kosten, sind nicht rieselfähig und staubexplosions-gefährlich.

Bei der Durchführung des erfindungsgemäßen Verfahrens ist eine Vorbehandlung der eingesetzten Baumwollfasern, z. B. mit tensidhaltiger Natronlauge, nicht mehr erforderlich, was einen weiteren Vorteil gegenüber dem Stand der Technik darstellt.

Das vorgenannte Verfahren zeichnet sich folglich durch eine besonders einfache und wirkungsvolle Verfahrensgestaltung aus, die zudem besonders umweltfreundlich ist. So werden beispielsweise keine schwefelhaltigen Stoffe eingesetzt bzw. erhalten, die besonderer Vorsichtsmaßnahmen beim Umgang und einer besonderen Entsorgung bedürfen.

Im Unterschied zum Stand der Technik sind die nach dem erfindungsgemäßen Verfahren erhältlichen Cellulose-Schwammtücher daher frei von Schwefel-verbindungen.

Ein wichtiger technischer Fortschritt ist außerdem die verbesserte Prozeßsicherheit des erfindungsgemäßen Verfahrens, durch die die Reproduzierbarkeit der Produktqualität deutlich erhöht wird.

Die Herstellung der Cellulose-Lösung erfolgt unter Schereintrag, insbesondere in Knet-Aggregaten. Bevorzugt wird die ionische Flüssigkeit bei Temperaturen von 70°C bis 100°C mit Cellulose versetzt, besonders bevorzugt bei Temperaturen von 80°C bis 90°C. Die Mischung wird so lange geknetet, bis sich eine im wesentlichen transparente Lösung gebildet hat. Anschließend wird die Cellulose-Lösung, vorzugsweise in einem Knet-Aggregat, mit Baumwollfasern, mit mindestens einem Porenbildner und mindestens einem Treibmittel versetzt und so lange weiter geknetet, bis eine homogene Mischung entstanden ist. Diese Mischung wird auf einen geeigneten Träger aufgetragen, insbesondere ein Stahlband, das bevorzugt eine Perforation aufweist, und anschließend Bedingungen ausgesetzt, die zu einer Zersetzung des Treibmittels, damit zu einer Aufschäumung der Mischung und zur Ausfällung der Cellulose führen. Hierfür wird die Mischung mit einer wäßrigen Lösung in Kontakt gebracht, deren pH-Wert < 7, bevorzugt < 6, besonders bevorzugt < 5 beträgt und die vorzugsweise eine Temperatur von mindestens 80°C, insbesondere von mindestens 90°C aufweist.

Erfindungsgemäß durchführbar ist auch ein Verfahren zur Herstellung eines eingefärbten Cellulose-Schwammtuches, bei dem ein weißes Cellulose-Schwammtuch, insbesondere unter Zusatz von Baumwollfasern, hergestellt wird und anschließend mit mindestens einem Reaktivfarbstoff eingefärbt wird.

Durch das nachträgliche Einfärben des weißen Cellulose-Schwammtuches werden Maschinenverschmutzungen während des Herstellungsprozesses des Schwammtuches minimiert, so dass die Maschinenlaufzeiten erhöht werden können. Besonders effizient ist das Herstellungsverfahren von eingefärbten Cellulose-Schwammtüchern daher, wenn das Schwammtuch erst nach dessen eigentlicher Herstellung eingefärbt wird und nicht bereits während des Herstellungsprozesses. Durch die Wahl von Reaktivfarbstoffen wird eine homogene Verteilung des Farbstoffes auf dem Schwammtuch auf der Basis von Cellulose, das insbesondere mit Baumwollfasern verstärkt ist, erreicht.

Dadurch, dass Reaktivfarbstoffe kovalente Bindungen mit dem Substrat eingehen, bluten die damit eingefärbten Schwammtücher nicht aus und zeichnen sich somit durch eine besondere Haftung und Waschechtheit aus.

Unter Reaktivfarbstoffen werden Farbstoffe verstanden, die neben einem Chromophor, zum Beispiel Azo-, Anthrachinon- oder Phthalocyaninfarbstoffe, daran angeschlossen mindestens eine reaktive Ankergruppe aufweisen, die mit den Hydroxylgruppen des Färbeguts reagiert. Geeignete reaktive Ankergruppen stellen beispielsweise die Vinylsulfongruppe und/oder auch halogensubstituierte Heterocyclen, wie halogensubstituiertes Pyrimidin, Diazin oder Triazin, dar.

Bevorzugt wird das weiße Cellulose-Schwammtuch demnach mit mindestens einem Reaktivfarbstoff eingefärbt, der als reaktive Ankergruppen halogensubstituierte Heterocyclen und/oder Vinylsulfone umfasst.

Für eine besonders praktische Lagerhaltung und für besonders gute Reaktionsbedingungen wird das mit mindestens einem Reaktivfarbstoff eingefärbte nasse Cellulose-Schwammtuch vorzugsweise geschnitten und aufgerollt.

Anschließend wird das aufgerollte Cellulose-Schwammtuch bevorzugt für mehrere Stunden bei Raumtemperatur gelagert, so dass der Reaktivfarbstoff durch diese Verweildauer auf dem Färbegut fixiert wird.

Ferner wird das mit mindestens einem Reaktivfarbstoff eingefärbte Cellulose-Schwammtuch vorzugsweise mit einem Feuchthaltemittel imprägniert.

Als Feuchthaltemittel wird bevorzugt Magnesiumchlorid eingesetzt. Magnesiumchlorid ist zudem besonders umweltverträglich und kostengünstig.

In einer weiteren Ausführungsform kann zur Herstellung eines eingefärbten Cellulose-Schwammtuches nach dem erfindungsgemäßen Verfahren vor der Zugabe des Porenbildners eine Pigmentdispersion zugesetzt werden.

Die Baumwollfasern werden bevorzugt in einer Menge zwischen 5% und 40% der Masse der Celluloselösung eingesetzt und führen insbesondere zu einer Verstärkung und damit zu einer höheren mechanischen Festigkeit des erhaltenen Cellulose-Schwammtuches.

Weiterhin lassen sich die mechanischen Eigenschaften und die Wasseraufnahme der erhaltenen Cellulose-Schwammtücher durch die Wahl der Cellulosekonzentration der verarbeiteten Lösung, durch das Molekulargewicht der eingesetzten Cellulose und durch die Konzentration der eingesetzten Poren- und Treibmittel einstellen.

So nimmt beispielsweise das Wasseraufnahmevermögen bei abnehmender Cellulosekonzentration, abnehmendem Molekulargewicht der eingesetzten Cellulose, zunehmender Konzentration an Porenbildner und zunehmender Konzentration an Treibmittel zu.

Die Unteransprüche stellen vorteilhafte Weiterbildungen des Erfindungsgegenstandes dar.

In bevorzugter Ausgestaltung des Verfahrens wird insbesondere im Hinblick auf eine besondere Verarbeitungssicherheit Cellulose mit einem Polymerisationsgrad von 500 bis 1200 eingesetzt. Durch diesen Polymerisationsgrad kann insbesondere eine Viskositätskonstanz der zu verarbeitenden Masse gewährleistet werden.

Als ionische Flüssigkeit wird bevorzugt 1-Ethyl-3-methylimidazoliumacetat eingesetzt. Dieses Salz weist einen Schmelzpunkt unter -20°C auf, eine dynamische Viskosität von 93,1 mPas bei 25°C und von 9,1 mPas bei 80°C. Ferner ist 1-Ethyl-3-methylimidazoliumacetat nach OECD-Kriterien leicht biologisch abbaubar und nach EG-Richtlinien nicht kennzeichnungspflichtig für den Umgang.

Als Porenbildner wird bevorzugt ein Alkali- oder Erdalkalisalz einer anorganischen Säure eingesetzt, wobei sich insbesondere Magnesiumsulfat und Natriumsulfat bewährt haben, die zudem kostengünstige Rohstoffe darstellen.

Der Porenbildner wird insbesondere im Hinblick auf eine besonders gute Verarbeitbarkeit der Rohstoffe und ein besonders gutes Wasseraufnahmevermögen des zu erhaltenden Schwammtuches zweckmäßigerweise in einem Gewichts-Verhältnis von 3:1 bis 4:1 zur Celluloselösung eingesetzt.

Als Treibmittel wird bevorzugt Natriumhydrogencarbonat eingesetzt. Das Treibmittel wird dabei so ausgewählt, dass keine exotherme Reaktion in der Celluloselösung ausgelöst wird.

Das Treibmittel wird zweckmäßigerweise in einer Menge zwischen 5% und 30% der Masse der Celluloselösung eingesetzt. Es hat sich gezeigt, dass der Gehalt an gelöster Cellulose in der eingesetzten Celluloselösung einen unmittelbaren Einfluss auf das Aufschäumverhalten besitzt. Je niedriger der Cellulosegehalt ist, desto höher ist der Aufschäumgrad, wodurch die Reißfestigkeit des Schwammtuches abnimmt. Ist der Cellulosegehalt andererseits zu hoch, nimmt die Aufschäumung derart ab, dass keine Porenstruktur mehr ausgebildet werden kann. Es hat sich ferner gezeigt, dass die Verwendung einer Treibmittelmenge von ungefähr 10% der Masse der Celluloselösung zu einer besonders guten Verarbeitbarkeit führt.

In bevorzugter Ausgestaltung des Verfahrens wird die ionische Flüssigkeit bei 80°C mit der gemahlenen Cellulose versetzt und so lange verknetet bis sich die Cellulose in der ionischen Flüssigkeit gelöst hat.

Vorzugsweise wird der Porenbildner nach dem Ausfällen der Cellulose in einem sauren Wasserbad bei einer Temperatur zwischen 95°C und 100°C herausgelöst.

Vorteilhafterweise wird das erhaltene Schwammtuch mit Wasser ausgewaschen, um es von Resten der ionischen Flüssigkeit zu befreien.

Ferner wird das erhaltene Schwammtuch vorzugsweise mit einem Feuchthaltemittel imprägniert.

Als Feuchthaltemittel wird bevorzugt Magnesiumchlorid eingesetzt. Magnesiumchlorid ist zudem besonders umweltverträglich und kostengünstig.

Vorzugsweise wird das erhaltene Cellulose-Schwammtuch vor dem Gebrauch konfektioniert.

Gegenstand der Erfindung ist ferner ein Cellulose-Schwammtuch, das ein besonders hohes Wasserrückhaltevermögen und eine besonders gute mechanische Festigkeit aufweist.

Das erfindungsgemäß hergestellte Cellulose-Schwammtuch eignet sich besonders gut für Reinigungszwecke, insbesondere im Haushalts- oder Industriebereich.

### Ausführung der Erfindung

Der Gegenstand der Erfindung wird anhand eines Beispiels näher erläutert, ohne die Erfindung einzuschränken.

Die Herstellung eines Cellulose-Schwammtuches umfasst die folgenden Verfahrensschritte:
1. Herstellen einer Celluloselösung:
   Hierzu wird als ionische Flüssigkeit wasserhaltiges 1-Ethyl-3-methylimidazoliumacetat (der Fa. BASF) in einem Kneter bei 80°C mit grob zerkleinerter Cellulose (der Fa. Borregard) mit einem Polymerisationsgrad zwischen 500 und 1200 versetzt und so lange geknetet bis sich die Cellulose in der ionischen Flüssigkeit gelöst hat;
2.Zumischen von Baumwollfasern (z. B. der Fa. Bremer Baumwollbörse), bevorzugt 30% bezogen auf die Masse der Cellulose;
3. Zumischen eines Porenbildners, insbesondere Natriumsulfat (der Fa. Merck KGaA), bevorzugt in einem Gewichts-Verhältnis von 4:1 zur Celluloselösung, und Zumischen eines Treibmittels, insbesondere Natriumhydrogencarbonat (der Fa. Merck KGaA), bevorzugt in einer Menge von 10% bezogen auf die Masse der Celluloselösung;
4. Ausstreichen der Mischung aus gelöster Cellulose, Baumwolle, Porenbildner und Treibmittel auf einem gelochten Stahlband;
5. Auftreiben und Ausfällen der Cellulose sowie Herauslösen des Porenbildners in einem sauren Wasserbad bei einer Temperatur zwischen 95°C und 100°C;
6. Auswaschen des erhaltenen Cellulose-Schwammtuches mit Wasser;
7. Imprägnieren des Cellulose-Schwammtuches mit einem Feuchthaltemittel, z.B. Magnesiumchlorid;
8. Konfektionieren des Cellulose-Schwammtuches;
9. Optional kann das erhaltene Cellulose-Schwammtuch mit einem Reaktivfarbstoff gefärbt werden.

Das Cellulose-Schwammtuch weist eine Dicke von 2 bis 10 mm, bevorzugt von 5 mm, auf und zeichnet sich durch ein besonders hohes Wasserrückhaltevermögen und eine gute mechanische Festigkeit aus.

Das erfindungsgemäß hergestellte Cellulose-Schwammtuch eignet sich besonders gut für Reinigungszwecke, insbesondere im Haushalts- oder Industriebereich.

## Patentansprüche

1. Verfahren zur Herstellung eines Cellulose-Schwammtuches, bei dem Cellulose in einer ionischen Flüssigkeit gelöst, mit Baumwollfasern, mit zumindest einem Porenbildner und zumindest einem Treibmittel gemischt und anschließend Bedingungen ausgesetzt wird, die zu einer Zersetzung des Treibmittels, damit zu einer Aufschäumung der Celluloselösung und zur Ausfällung der Cellulose führen.

2. Verfahren nach Anspruch 1, bei dem Cellulose mit einem Polymerisationsgrad von 500 bis 1200 eingesetzt wird.

3. Verfahren nach Anspruch 1 oder 2, bei dem als ionische Flüssigkeit 1-Ethyl-3-methylimidazoliumacetat eingesetzt wird.

4. Verfahren nach einem der vorhergehenden Ansprüche, bei dem Baumwollfasern in einer Menge zwischen 5% und 40% der Masse der Cellulose eingesetzt werden.

5. Verfahren nach einem der vorhergehenden Ansprüche, bei dem als Porenbildner ein Alkali- oder Erdalkalisalz einer anorganischen Säure eingesetzt wird.

6. Verfahren nach einem der vorhergehenden Ansprüche, bei dem der Porenbildner in einem Verhältnis von 3:1 bis 4:1 zur Celluloselösung eingesetzt wird.

7. Verfahren nach einem der vorhergehenden Ansprüche, bei dem als Treibmittel Natriumhydrogencarbonat eingesetzt wird.

8. Verfahren nach einem der vorhergehenden Ansprüche, bei dem das Treibmittel in einer Menge zwischen 5% und 30% der Masse der Celluloselösung eingesetzt wird.

9. Verfahren nach einem der vorhergehenden Ansprüche, bei dem im wesentlichen wasserfreie Cellulose verwendet wird.

10. Verfahren nach einem der vorhergehenden Ansprüche, bei dem die ionische Flüssigkeit bei Temperaturen von 70°C bis 100°C, vorzugsweise von 80°C bis 90°C, mit Cellulose versetzt und im wesentlichen homogenisiert wird.

11. Verfahren nach einem der vorhergehenden Ansprüche, bei dem die Homogenisierung mittels eines Knet-Aggregates erfolgt.

12. Verfahren nach einem der vorhergehenden Ansprüche, bei dem nicht gemahlene Cellulose verwendbar ist.

13. Verfahren nach einem der vorhergehenden Ansprüche, bei dem der Porenbildner nach dem Ausfällen der Cellulose in einem sauren Wasserbad bei einer Temperatur zwischen 95°C und 100°C herausgelöst wird.

14. Verfahren nach einem der vorhergehenden Ansprüche, bei dem das erhaltene Cellulose-Schwammtuch mit Wasser ausgewaschen wird.

15. Verfahren nach einem der vorhergehenden Ansprüche, bei dem das erhaltene Cellulose-Schwammtuch mit einem Feuchthaltemittel imprägniert wird.

16. Verfahren nach Anspruch 15, bei dem als Feuchthaltemittel Magnesiumchlorid eingesetzt wird.

17. Verfahren nach einem der vorhergehenden Ansprüche, bei dem das erhaltene Cellulose-Schwammtuch konfektioniert wird.

18. Verfahren nach einem der vorhergehenden Ansprüche, bei dem das erhaltene weiße Cellulose-Schwammtuch mit mindestens einem Reaktivfarbstoff gefärbt wird.

19. Cellulose-Schwammtuch, das gemäß einem Verfahren nach einem der vorhergehenden Ansprüche herstellbar, vorzugsweise hergestellt ist.

20. Verwendung eines Cellulose-Schwammtuches nach Anspruch 19 für Reinigungszwecke.

## Claims

1. Process for producing a cellulose sponge cloth wherein cellulose is dissolved in an ionic liquid, mixed with cotton fibres, with at least one pore-former and at least one blowing agent and subsequently exposed to conditions which lead to a decomposition of the blowing agent, hence to a foaming up of the cellulose solution and to precipitation of the cellulose.

2. Process according to Claim 1, wherein cellulose having a degree of polymerization in the range from 500 to 1200 is used.

3. Process according to Claim 1 or 2, wherein 1-ethyl-3-methylimidazolium acetate is used as ionic liquid.

4. Process according to any preceding claim, wherein cotton fibres are used in an amount between 5% and 40% of the mass of the cellulose.

5. Process according to any preceding claim, wherein an alkali or alkaline earth metal salt of an inorganic acid is used as pore-former.

6. Process according to any preceding claim, wherein the pore-former is used in a ratio of 3:1 to 4:1 relative to the cellulose solution.

7. Process according to any preceding claim, wherein sodium hydrogencarbonate is used as blowing agent.

8. Process according to any preceding claim, wherein the blowing agent is used in an amount between 5% and 30% of the mass of the cellulose solution.

9. Process according to any preceding claim, wherein essentially anhydrous cellulose is used.

10. Process according to any preceding claim, wherein the ionic liquid is at temperatures of 70°C to 100°C and preferably of 80°C to 90°C when it is admixed with cellulose and substantially homogenized therewith.

11. Process according to any preceding claim, wherein the homogenizing is effected using a kneading assembly.

12. Process according to any preceding claim, wherein cellulose which has not been ground can be used.

13. Process according to any preceding claim, which comprises dissolving out the pore-former after precipitation of the cellulose in an acidic water bath at a temperature between 95°C and 100°C.

14. Process according to any preceding claim, wherein the cellulose sponge cloth obtained is washed off with water.

15. Process according to any preceding claim, wherein the cellulose sponge cloth obtained is impregnated with a humectant.

16. Process according to Claim 15, wherein magnesium chloride is used as humectant.

17. Process according to any preceding claim, wherein the cellulose sponge cloth obtained is end itemed.

18. Process according to any preceding claim, wherein the white cellulose sponge cloth obtained is dyed with at least one reactive dye.

19. Cellulose sponge cloth obtainable, preferably obtained, by a process according to any preceding claim.

20. Use of a cellulose sponge cloth according to Claim 19 for cleaning purposes.

## Revendications

1. Procédé pour la fabrication d'une toile-éponge à base de cellulose, dans lequel on dissout de la cellulose dans un liquide ionique, on la mélange avec des fibres de coton, avec au moins un agent porogène et au moins un agent d'expansion et ensuite on l'expose à des conditions qui conduisent à une décomposition de l'agent d'expansion, et avec celle-ci à un moussage de la solution de cellulose et à la précipitation de la cellulose.

2. Procédé selon la revendication 1, dans lequel on utilise de la cellulose ayant un degré de polymérisation de 500 à 1 200.

3. Procédé selon la revendication 1 ou 2, dans lequel on utilise comme liquide ionique de l'acétate de 1-éthyl-3-méthylimidazolium.

4. Procédé selon l'une quelconque des revendications précédentes, dans lequel on utilise les fibres de coton en une quantité comprise entre 5 % et 40 % de la masse de la cellulose.

5. Procédé selon l'une quelconque des revendications précédentes, dans lequel on utilise comme agent porogène un sel alcalin ou alcalino-terreux d'un acide inorganique.

6. Procédé selon l'une quelconque des revendications précédentes, dans lequel on utilise l'agent porogène en un rapport de 3:1 à 4:1 à la solution de cellulose.

7. Procédé selon l'une quelconque des revendications précédentes, dans lequel on utilise comme agent d'expansion de l'hydrogénocarbonate de sodium.

8. Procédé selon l'une quelconque des revendications précédentes, dans lequel on utilise l'agent d'expansion en une quantité comprise entre 5 % et 30% de la masse de la solution de cellulose.

9. Procédé selon l'une quelconque des revendications précédentes, dans lequel on utilise de la cellulose pratiquement anhydre.

10. Procédé selon l'une quelconque des revendications précédentes, dans lequel le liquide ionique est additionné de cellulose à des températures de 70 °C à 100 °C, de préférence de 80 °C à 90 °C et essentiellement homogénéisé.

11. Procédé selon l'une quelconque des revendications précédentes, dans lequel l'homogénéisation s'effectue au moyen d'un appareil de malaxage.

12. Procédé selon l'une quelconque des revendications précédentes, dans lequel de la cellulose non broyée est utilisable.

13. Procédé selon l'une quelconque des revendications précédentes, dans lequel après la précipitation de la cellulose l'agent porogène est éliminé par dissolution dans un bain aqueux acide à une température comprise entre 95 °C et 100 °C.

14. Procédé selon l'une quelconque des revendications précédentes, dans lequel on lave complètement avec de l'eau la toile-éponge à base de cellulose obtenue.

15. Procédé selon l'une quelconque des revendications précédentes, dans lequel on imprègne avec un agent retenant l'humidité la toile-éponge à base de cellulose obtenue.

16. Procédé selon la revendication 15, dans lequel on utilise comme agent retenant l'humidité du chlorure de magnésium.

17. Procédé selon l'une quelconque des revendications précédentes, dans lequel on confectionne la toile-éponge à base de cellulose obtenue.

18. Procédé selon l'une quelconque des revendications précédentes, dans lequel on teint avec au moins un colorant réactif la toile-éponge blanche à base de cellulose obtenue.

19. Toile-éponge à base de cellulose, qui peut être fabriquée, de préférence est fabriquée, conformément à un procédé selon l'une quelconque des revendications précédentes.

20. Utilisation d'une toile-éponge à base de cellulose selon la revendication 19, à des fins de nettoyage.
